# EUROPEAN PATENT APPLICATION

(11) **EP 2 706 024 A1**
(43) Date of publication of application: **12.03.2014**
(21) Application number: 13182743.8
(22) Date of filing: 03.09.2013
(51) Int. Cl.: B65G 33/18, B65G 33/32, F28F 5/06, F28F 9/007

(54) **Device for transporting a transportable material**

(30) Priority: 10.09.2012 NL 2009436
(71) Applicant: Transportschroeven- en Machinefabriek van Beek B.V., 5151 RP Drunen (NL)
(72) Inventor: Van Der Lande, Christ Eduard, 5151 RP Drunen (NL)
(74) Representative: van Oeffelt, Abraham

(57) **Abstract**

The present invention relates to a device (1) for transporting a transportable material, comprising a housing (2) with at least one transportable material throughfeed channel (6) for at least partially enclosing the transportable material; a suspension (3) connected movably to the housing for at least one conveyor screw (7), together with which the conveyor screw (7) is displaceable between a first position, in which the conveyor screw (7) is situated in the transportable material throughfeed channel (6), and a second position in which the conveyor screw (7) is situated outside the transportable material throughfeed channel (6) and accessible for cleaning.

## Description

The present invention relates to a device for transporting a transportable material by means of screw conveyors.

It is known for the purpose of transporting transportable material to make use of screw conveyors which are generally placed in a closed housing, wherein transportable material is supplied on one side and transported to another side by the conveyor screw.

For cleaning and maintenance of the conveyor screw, the conveyor screw is disconnected and pulled out of the enclosing housing in the longitudinal direction. The screw is then accessible for the purpose of cleaning or repairs, and is subsequently pushed back into the housing, mounted and taken into use again. This is however a time-consuming operation.

The present invention therefore has for its object to obviate the above stated drawbacks or to provide a suitable alternative for cleaning or exchanging a conveyor screw.

The invention comprises for this purpose a device for transporting a transportable material, comprising a housing with at least one transportable material throughfeed channel for at least partially enclosing the transportable material, a suspension connected movably to the housing for at least one conveyor screw together with which the conveyor screw is displaceable between a first position, in which the conveyor screw is situated in the transportable material throughfeed channel, and a second position in which the conveyor screw is situated outside the transportable material throughfeed channel and accessible for cleaning.

Because the conveyor screw is displaceable together with the housing, the screw need not be removed (in the longitudinal direction) from the housing. The movement of the housing and the at least one conveyor screw can be a translation or rotation movement or a combination thereof, preferably perpendicularly of the longitudinal direction of the conveyor screw. In addition to allowing simple uncovering of the conveyor screw for cleaning purposes, replacing thereof is also simplified in that the screw remains connected to the suspension and thus remains mounted with the correct orientation for replacement.

In an embodiment of the present invention the device is provided with a drive for rotatable driving of the conveyor screw in axial direction at least in the first position, wherein the drive is provided with a releasable coupling means for co-action with the conveyor screw, and the conveyor screw is provided with a counter-coupling means.

In order to transport or mix the transportable material at a determined pitch with a conveyor screw the conveyor screw has to rotate. A drive means, for instance an electric motor or a handle, is provided for this purpose. Because the conveyor screw in its suspension and the housing are displaceable together, the drive of the conveyor screw can be uncoupled from the conveyor screw so that it need not be co-displaced. The drive is provided for this purpose with a coupling means for co-action with a counter-coupling means on the conveyor screw. When the conveyor screw changes position, the coupling can be disconnected and the conveyor screw can be displaced relative to the drive.

In an embodiment the drive is arranged on the housing. The drive hereby remains behind on the housing when the suspension displaces together with the conveyor screw.

In another embodiment of the present invention an actuator such as an electric motor is provided for displacing the suspension and the conveyor screw. The suspension and at least one conveyor screw can represent a relatively great weight. In order to realize a smooth displacement of these components use can be made of an actuator for the displacement. An electric motor could for instance be used to displace or rotate the components in a controlled manner relative to the housing so that the conveyor screw becomes available for maintenance and/or cleaning. The actuator can also ensure that the components remain in their second position until the maintenance and/or cleaning has been completed, and can provide for a smooth and controlled movement back to the first position without damaging the components.

In an embodiment of the present invention an optionally releasable cover part is provided for covering the transportable material throughfeed channel. The cover part thereby regulates access to the transportable material throughfeed channel and to the conveyor screw present therein, and can ensure that the transportable material cannot leave the transportable material throughfeed channel via paths not intended for the purpose.

In another embodiment the housing comprises a medium throughfeed channel separated from the transportable material throughfeed channel for throughfeed of a medium for cooling or heating the housing and/or the conveyor screw, and so also a transportable material. The transportable material can be cooled or heated to a desired temperature during the transport or mixing of the transportable material. The housing and/or the conveyor screw can for this purpose for instance be hollow and configured for throughfeed of a medium with a higher or lower temperature than the transportable material. The temperature of the transportable material can hereby be influenced by heat exchange and the transportable material can be brought to the desired temperature.

In an embodiment the medium throughfeed channel also extends from the housing to the suspension and/or conveyor screw, wherein a flexible medium connection extends between the housing and the suspension. Heat exchange between the medium throughfeed channel and the transportable material is increased when the surface area available for heat exchange is also enlarged. By having the medium throughfeed channel extend over the housing, suspension and/or conveyor screw the entire transportable material throughfeed channel is used for this purpose, wherein the transition between the housing and the suspension can be flexible so that the medium throughfeed channel need not be disassembled when the suspension with the at least one conveyor screw is in the second position.

In an embodiment a second transportable material throughfeed channel is provided in the housing for the purpose of transporting a second transportable material, optionally differing from the first, by means of a second conveyor screw. Two conveyor screws are for instance able to better mix the transportable material and, if both screws are equipped with a medium throughfeed channel, could provide for an improved heat exchange. Two conveyor screws are also able to transport more transportable material per unit of time from a first location to a second location. The first and second transportable material throughfeed channels are adjacent to each other and/or connected to each other.

In an embodiment at least two conveyor screws are provided, wherein the second conveyor screw is rotatable in the direction opposite to that of the first conveyor screw. When conveyor screws of different or opposite pitch are for instance chosen, two conveyor screws can effect a forward movement of the transportable material by rotating in opposite directions.

In an embodiment the first and the second conveyor screws are drivable by the same drive means. When the first and second conveyor screws have to be rotatable in different directions, use can for instance be made of a gear system to influence the rotation. The number of components on the device is limited and maintenance carried out more easily by making use of a single drive means.

If a single drive means is however unable to produce sufficient power to drive more than one conveyor screw, in another embodiment more than one drive means is provided for driving the at least two conveyor screws. Each conveyor screw can for instance be driven by its own drive means.

The invention will now be elucidated with reference to the following figures, in which:
- Figure 1 shows a device with closed cover part;
- Figure 2 shows a device with opened cover part;
- Figure 3 shows a device with accessible conveyor screws;
- Figure 4 shows the device of figure 3 from a different perspective; and
- Figure 5 shows a detail view of the displacement.

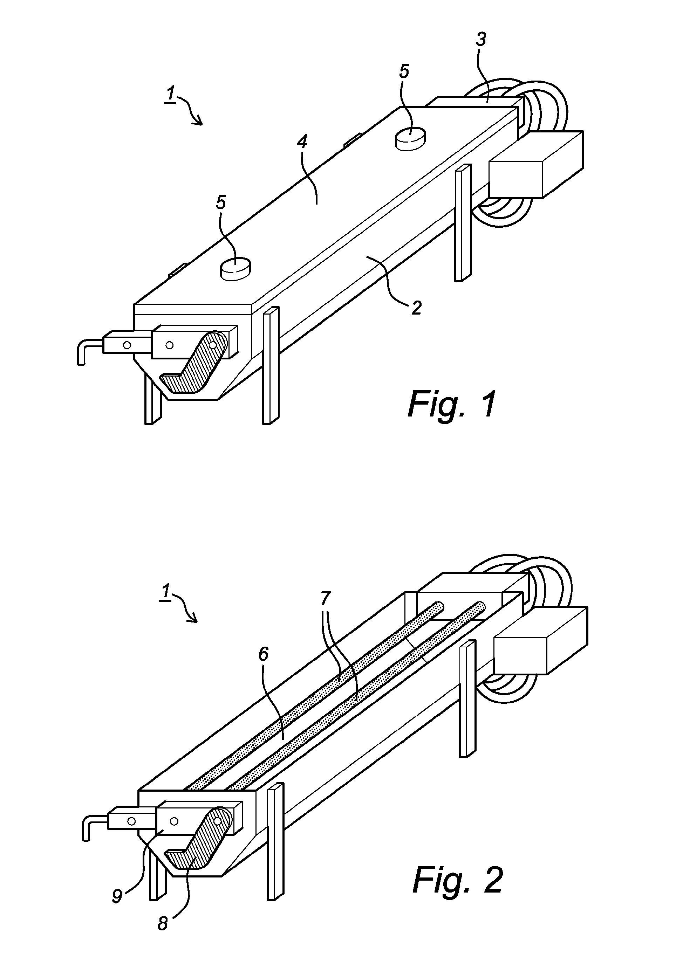

Figure 1 shows a device 1 for transporting a transportable material, comprising a housing 2 and a suspension 3 connected movably to housing 2. Cover part 4 is shown in its closed position for covering the transportable material throughfeed channel. Shown in cover part 4 are two openings 5 for supplying and discharging a transportable material.

Figure 2 shows device 1, wherein the cover part (not shown) does not cover the transportable material throughfeed channel 6. Two conveyor screws 7 are driven by drive 8, wherein gear system 9 is present to regulate the rotation of the two conveyor screws 7.

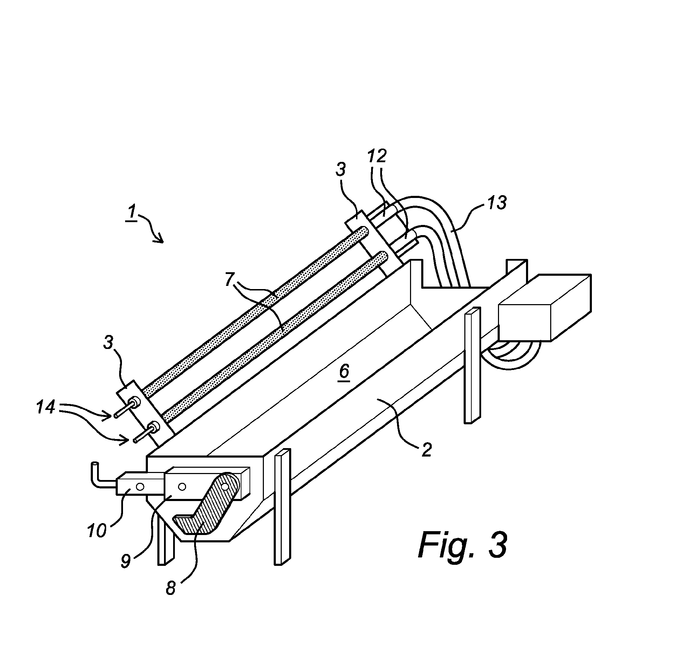

Figure 3 shows device 1, wherein suspension 3 for conveyor screws 7 is displaced by means of actuator 10 from the first position, in which conveyor screws 7 are situated in the transportable material throughfeed channel 6, to the second position in which the conveyor screws are situated outside the transportable material throughfeed channel. The conveyor screws are now accessible for maintenance and cleaning. Medium for cooling or heating the transportable material can be fed through by conveyor screws 7 by means of two medium throughfeed channels 12 separated from the transportable material throughfeed channel 6. Because the conveyor screws are displaceable, a flexible medium connection 13 is provided between housing 2 and suspension 3. Conveyor screws 7 are equipped with counter-coupling means 14 for releasable coupling of conveyor screws 7 and drive 8 to optional gear system 9.

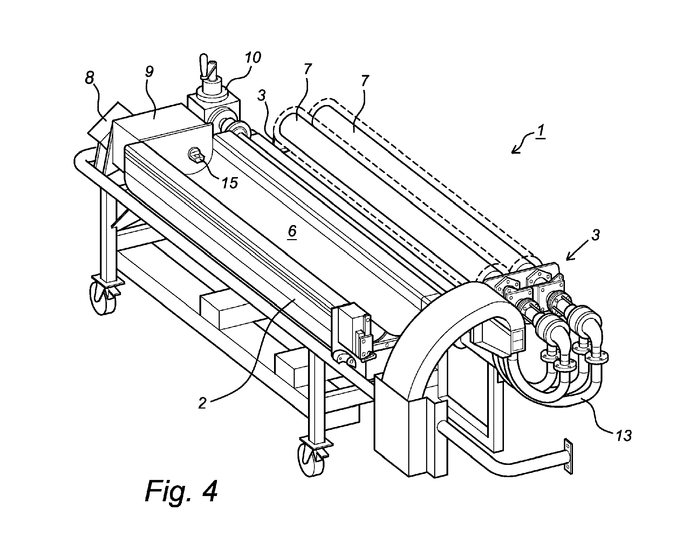

Figure 4 shows device 1 from a different perspective, wherein one of the releasable coupling means 15 is shown for coupling to counter-coupling means 14 of conveyor screws 7.

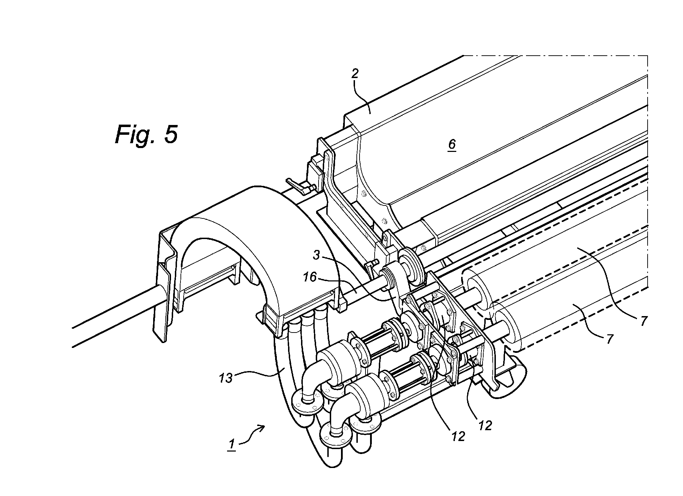

Figure 5 shows a detail view of the co-action of housing 2, second housing part 3, medium throughfeed channels 12, conveyor screws 7, suspension 3 and flexible coupling 13. Also shown is a shaft 16 with which the actuator 10 (not shown) can change the positions of suspension 3 and conveyor screws 7 connected thereto by rotating this shaft, and thereby the components connected to this shaft.

## Claims

1. Device for transporting a transportable material, comprising
- a housing with at least one transportable material throughfeed channel for at least partially enclosing the transportable material;
- a suspension connected movably to the housing for at least one conveyor screw, together with which the conveyor screw is displaceable between:
○ a first position in which the conveyor screw is situated in the transportable material throughfeed channel, and
○ a second position in which the conveyor screw is situated outside the transportable material throughfeed channel and accessible for cleaning.

2. Device as claimed in claim 1, comprising a drive for axial rotatable driving of the conveyor screw at least in the first position, wherein the drive is provided with a releasable coupling means for co-action with the conveyor screw, and the conveyor screw is provided with a counter-coupling means.

3. Device as claimed in claim 2, wherein the drive is arranged on the housing.

4. Device as claimed in any of the foregoing claims, wherein an actuator such as an electric motor is provided for displacing the suspension and the conveyor screw.

5. Device as claimed in any of the foregoing claims, comprising an optionally releasable cover part for covering the transportable material throughfeed channel.

6. Device as claimed in any of the foregoing claims, wherein the housing comprises a medium throughfeed channel separated from the transportable material throughfeed channel for throughfeed of a medium for cooling or heating the housing and/or the conveyor screw, and so also a transportable material.

7. Device as claimed in claim 6, wherein the medium throughfeed channel also extends from the housing to the suspension and/or conveyor screw, wherein a flexible medium connection extends between the housing and the suspension.

8. Device as claimed in any of the foregoing claims, wherein a second transportable material throughfeed channel is provided in the housing for the purpose of transporting a second transportable material, optionally differing from the first, by means of a second conveyor screw.

9. Device as claimed in claim 8, wherein the first and second transportable material throughfeed channels are adjacent to each other and/or connected to each other.

10. Device as claimed in claim 8 or 9, wherein the second conveyor screw is rotatable in the direction opposite to that of the first conveyor screw.

11. Device as claimed in any of the claims 8-10, wherein the first and the second conveyor screws are drivable by the same drive means.

12. Device as claimed in any of the claims 8-10, comprising at least a second drive means for driving the at least two conveyor screws.
